Europäisches Patentamt

(19) European Patent Office

Office européen des brevets

(11) Veröffentlichungsnummer: **0 082 399**
**A2**

(12) **EUROPÄISCHE PATENTANMELDUNG**

(21) Anmeldenummer: **82111292.7**

(22) Anmeldetag: **06.12.82**

(51) Int. Cl.³: **C 08 F 297/02**
**C 10 M 1/08, C 09 J 3/14**

(30) Priorität: **18.12.81 DE 3150171**

(43) Veröffentlichungstag der Anmeldung:
**29.06.83 Patentblatt 83/26**

(84) Benannte Vertragsstaaten:
**AT BE DE FR GB NL**

(71) Anmelder: **BASF Aktiengesellschaft**
**Carl-Bosch-Strasse 38**
**D-6700 Ludwigshafen(DE)**

(72) Erfinder: **Brandstetter, Franz, Dr.**
**Ritterbueschel 45**
**D-6730 Neustadt(DE)**

(72) Erfinder: **Ball, Wolfgang, Dr.**
**0 6,9**
**·D-6800 Mannheim 1(DE)**

(72) Erfinder: **Gropper, Hans, Dr.**
**Sternstrasse 155**
**D-6700 Ludwigshafen(DE)**

(72) Erfinder: **Mueller, Wolfgang F., Dr.**
**Hahnenweg 20**
**D-6730 Neustadt(DE)**

(72) Erfinder: **Werner, Michael, Dr.**
**Harzburger Weg 21**
**D-6800 Mannheim 33(DE)**

(72) Erfinder: **Ziegler, Walter, Dr.**
**Starenweg 15**
**D-6803 Edingen-Neckarhausen(DE)**

(54) **Verfahren zur Herstellung von Blockcopolymerisaten auf Basis von Ethylencopolymerisaten, Blockcopolymerisate und deren Verwendung als Additive für Thermoplaste und Mineralöle oder als Schmelzhaftkleber.**

(57) Die Erfindung betrifft ein Verfahren zur Herstellung von Blockcopolymerisaten auf der Basis von Ethylencopolymerisaten, die als funktionelle Gruppe mindestens eine Acrylsäureester-, Methacrylsäureester-, Keto-, Aldehyd-, Nitril-, Halogen-, Carbonsäureanhydrid-, Imino-, Epoxyd- oder Isocyanatgruppe einpolymerisiert enthalten, wobei die Ethylencopolymerisate in Lösung mit lebenden polymeren Anionen, erhalten aus ethylenisch ungesättigten, anionisch polymerisierbaren Monomeren, unter Ausschluß von Luft und Feuchtigkeit umgesetzt werden.

Die Ethylencopolymerisate enthalten vorzugsweise Acrylsäure- oder Methacrylsäurealkylester, Maleinsäureanhydrid, Kohlenmonoxid oder Methylvinylketon einpolymerisiert, als Lösungsmittel werden insbesondere aromatische Kohlenwasserstoffe oder Tetrahydrofuran verwendet, die lebenden polymeren Anionen bestehen aus 30 oder mehr Monomeren, die ethylenisch ungesättigten, anionisch polymerisierbaren Monomeren sind insbesondere Styrol, Butadien, Isopren oder ein Gemisch dieser Monomeren und es wird zweckmäßig bei Temperaturen im Bereich von 0 bis 130°C umgesetzt.

Die Erfindung betrifft ferner Blockcopolymerisate der allgemeinen Formel: $[(A_n)_i(B_l)_k(C_m)_j]$, wobei $A = -CH_2-CH_2-$, B ein mit Ethylen copolymerisiertes (Meth-)Acrylsäureester-, Keto-, Aldehyd-, Nitril-, Halogen-, Anhydrid-, Imino-, Epoxyd- oder Isocyanat-Gruppen enthaltendes Monomer oder Kohlenmonoxid, C ein oder mehrere anionisch polymerisierte Monomere, n und m eine ganze Zahl größer als 30, l, i, k und j eine ganze Zahl gleich oder größer als 1 ist.

Bevorzugt ist B Acryl- oder Methacrylsäurealkylester, Maleinsäureanhydrid, Kohlenmonoxid oder Methylvinylketon und C ein polymerisiertes Styrol, Butadien, Isopren oder ein beliebiges Copolymerisat dieser Monomeren und n = 200 bis 8000, m = 100 bis 4000, l = 1 bis 1500, i = 1 bis 5, k = 1 bis 20 und j = 1 bis 20.

Die Blockcopolymerisate können als Additive zu thermoplastischen Kunststoffen oder Mineralölen oder als Schmelzhaftkleber verwendet werden.

EP 0 082 399 A2

Verfahren zur Herstellung von Blockcopolymerisaten auf Basis von Ethylencopolymerisaten, Blockcopolymerisate und deren Verwendung als Additive für Thermoplaste und Mineralöle oder als Schmelzhaftkleber

Die Erfindung betrifft ein Verfahren zur Herstellung von Blockcopolymerisaten auf der Basis von Ethylenpolymerisaten, die als funktionelle Gruppe mindestens eine Acrylsäureester-, Methacrylsäureester-, Keto-, Aldehyd-, Nitril-, Halogen-, Carbonsäureanhydrid-, Imino-, Epoxy- oder Isocyanatgruppe einpolymerisiert enthalten, die Blockcopolymerisate selbst sowie deren Verwendung als Additive zu Thermoplasten und Mineralölen oder als Schmelzkleber.

Bei derartigen Blockcopolymerisaten handelt es sich um Polymere, in denen neben normalen Copolymeren, die aus Ethylen und einem mit Ethylen copolymerisierbaren Monomer aufgebaut sind, homo- oder copolymere Kettenabschnitte oder Blöcke anderer Monomere einpolymerisiert sind.

Blockcopolymerisate auf der Basis Ethylen werden durch Hydrieren von Butadien-Styrol-Blockcopolymerisaten erhalten, wie dies beispielsweise in der Literaturstelle GB-PS 11 16 426 beschrieben ist. Aus der GB-PS 13 11 025 ist es auch bereits bekannt, Blockcopolymerisate von ethylenisch ungesättigten Kohlenwasserstoffen mittels eines polymeren Katalysators herzustellen. Beide Verfahren sind umständlich und besitzen hinsichtlich der erhaltenen Ethylenblockcopolymerisate keine großen Variationsmöglichkeiten.

Der Erfindung lag also die Aufgabe zugrunde, ein einfaches und flexibles Verfahren zur Herstellung von Blockcopolymerisaten auf der Basis von Ethylenpolymerisaten aufzufinden.

Fre/P

Eine weitere Aufgabe der Erfindung bestand darin, Ethylenblockcopolymerisate aufzuzeigen, welche als Additive für thermoplastische Kunststoffe oder Mineralöle und als Schmelzkleber geeignet sind.

Diese Aufgaben wurden dadurch gelöst, daß die eingangs beschriebenen Ethylencopolymerisate in Lösung mit lebenden polymeren Anionen, erhalten aus ethylenisch ungesättigten, anionisch polymerisierbaren Monomeren, unter Ausschluß von Luft und Feuchtigkeit umgesetzt werden.

Nach bevorzugten Verfahrensweisen ist das Ethylencopolymerisat ein Copolymerisat des Ethylens mit einem Acryl-säure- oder Methacrylsäurealkylester, mit Maleinsäurean-hydrid, Kohlenmonoxid oder Methylvinylketon.

Als Lösungsmittel wird nach erfindungsgemäßem Verfahren bevorzugt ein bei Raumtemperatur flüssiger, aromatischer Kohlenwasserstoff oder Tetrahydrofuran eingesetzt.

Bevorzugt bestehen die lebenden polymeren Anionen aus 30 oder mehr ethylenisch ungesättigten, anionisch polymerisierten Monomeren.

Die ethylenisch ungesättigten, anionisch polymerisierbaren Monomeren sind bevorzugt Styrol, Butadien, Isopren oder Gemische dieser Monomeren.

Besonders bevorzugt ist ein Verfahren, bei dem im Temperaturbereich von 0 bis 130°C umgesetzt wird.

Die Aufgaben wurden ferner gelöst durch Blockcopolymeri-sate der allgemeinen Formel:

$[(A_n)_i \, (B_l)_k \, (C_m)_j]$, wobei A = $-CH_2-CH_2-$, B ein mit Ethylen copolymerisiertes (Meth-)Acrylsäureester-, Keto-, Aldehyd-, Nitril-, Halogen-, Anhydrid-, Imino-, Epoxid- oder Isocyanatgruppen enthaltendes Monomer oder Kohlenmonoxid, C ein oder mehrere anionisch polymerisierte Monomere, n und m eine ganze Zahl größer als 30, l, i, k und j eine ganze Zahl gleich oder größer als 1 und $k.l \geq j$ ist.

In den Blockcopolymerisaten ist B bevorzugt ein Acryl- oder Methacrylsäurealkylester, Maleinsäureanhydrid, Kohlenmonoxid oder Methylvinylketon und C ein polymerisiertes Styrol, Butadien, Isopren oder ein beliebiges Copolymerisat dieser Monomeren.

Besonders bevorzugt sind Blockcopolymerisate der oben beschriebenen Art, bei denen n = 200 bis 8000, m = 100 bis 4000, l = 1 bis 1500, i = 1 bis 5, k = 1 bis 20 und j = 1 bis 20.

Die erfindungsgemäß zu verwendenden Ethylencopolymerisate, die als funktionelle Gruppe mindestens eine Acrylsäureester-Methacrylsäureester-, Keto-, Aldehyd-, Nitril-, Halogen-, Carbonsäureanhydrid-, Imino-, Epoxy- oder Isocyanatgruppe enthalten, sind an sich bekannt (vgl. z.B. Houben-Weyl, "Methoden der organischen Chemie", Band 14/1 [1961] Seiten 619 bis 621, Verlag Georg Thieme, Stuttgart oder Renfrew & Morgan, "Polythene", [1960], Seiten 345 bis 369, Verlag Iliffe & Sons Ltd., London). Die Herstellung der Ethylencopolymerisate kann nach den herkömmlichen Verfahren im Autoklaven und/oder rohrförmigen Polymerisationssystem bei Drücken von 200 bis 5000 bar und Temperaturen von 50 bis 450°C in Gegenwart radikalisch zerfallender Polymerisationsinitiatoren erfolgen (vgl. Ullmanns Encyklopädie der technischen Chemie, Band 19, (1980) Seiten 167 bis 226). Als Comonomere zum Ethylen

kommen u.a. in Frage: Alkylester der Acryl-oder Methacryl-säure, Kohlenmonoxid, Methylvinylketon, Acrolein, Acrylnitril, Vinylchlorid, Maleinsäureanhydrid, Vinylisocyanat, Vinylglycidylether, Glycidyl(meth)acrylat oder Vinylcyclohexanonmonoxid.

Die Ethylencopolymerisate haben eine Dichte im Bereich von 0,910 bis 0,965, insbesondere 0,915 bis 0,960 g/cm$^3$. Die Schmelzindices der Ethylencopolymerisate, gemessen bei 190$^\circ$C und einem Auflagegewicht von 2,16 kp, liegen oberhalb von 0,1 g/10 min. Die Ethylencopolymerisate weisen die allgemeine Formel: $[(A_n)_i (B_1)_k]$ auf, wobei A = $-CH_2-CH_2-$ und B das einpolymerisierte Comonomer mit einer der oben beschriebenen funktionellen Gruppen, n = eine ganze Zahl größer als 30, 1, i und k = eine ganze Zahl gleich oder größer als 1 und k.1 $\geq$ j ist. Die Zahlen für n und l entsprechend dem Polymerisationsgrad, die Zahlen für i und k der Blockanzahl im Copolymerisat.

Für das erfindungsgemäße Verfahren besonders geeignet sind Copolymerisate des Ethylens mit Acrylsäure- oder Methacrylsäurealkylestern wie Acrylsäuremethyl-, -n-butyl-, -tert.--butyl- oder -ethylhexylester, Methacrylsäuremethylester, Maleinsäureanhydrid, Kohlenmonoxid oder Methylvinylketon.

Nach erfindungsgemäßem Verfahren werden die oben beschriebenen Ethylencopolymerisate in Lösung mit lebenden polymeren Anionen, erhalten aus ethylenisch ungesättigten, anionisch polymerisierbaren Monomeren, unter Ausschluß von Luft und Feuchtigkeit umgesetzt.

Unter lebenden polymeren Anionen werden dabei Polymere verstanden, in denen die Kettenenden noch zur weiteren Anlagerung von Monomeren oder Polymeren fähig sind (vgl. G. Henrici-Olive, "Polymerisation", Verlag Chemie, Weinheim [1969]. Die Herstellung der lebenden polymeren Anionen aus den ethylenisch ungesättigten, anionisch polymerisierbaren Monomeren erfolgt auf übliche Art und Weise nach bekannten Verfahren durch Polymerisation der Monomeren in Lösung in Gegenwart eines Monolithium-Kohlenwasserstoffs als Initiator. Als Monomere kommen dabei alle anionisch polymerisierbaren Verbindungen in Frage, wie sie u.a. in "Polymer Chemistry" von B. Vollmert, Springer-Verlag, Berlin, Heidelberg, New York, (1973), Seiten 44 bis 47 beschrieben sind. Bevorzugt sind Styrol, Butadien, Isopren sowie deren Gemische. Es können dabei nur ein anionisch polymerisierbares oder gleichzeitig mehrere Monomere eingesetzt werden. Je nach verwendeten Polymerisations-Verfahren werden aus den obigen Monomeren Copolymerisate mit mehr oder weniger statistischer Verteilung der Monomeren entlang der Polymerkette oder bei Einsatz nur eines Monomeren reine Homopolymerisate erhalten. Bei den Polymeren aus den anionisch polymerisierbaren Monomeren handelt es sich um Produkte des Typs $C_m$; wobei C ein oder mehrere anionisch polymerisierte Monomere und m der Polymerisationsgrad ist; m ist dabei größer 30.

Die Umsetzung des Ethylencopolymerisates mit dem aktiven Living-Polymerisat eines oder mehrerer anionisch polymerisierter Monomerer erfolgt im allgemeinen in Lösung. Als Lösungsmittel eignen sich dabei vor allem Tetrahydrofuran oder bei Raumtemperatur flüssige aromatische Kohlenwasserstoffe wie z.B. Benzol, Xylol, Toluol oder Ethylbenzol. Sinnvollerweise, aber nicht zwingenderweise verwendet man das entsprechende Lösungsmittel schon bei der Herstellung des lebenden Polymerisates aus den anionisch polymerisierbaren Monomeren.

Erfindungsgemäß kann sowohl die Lösung des aktiven Living-Polymerisates ($C_m$) zu einer Lösung des Ethylencopolymerisates $[(A_n)_i (B_1)_k]$ als auch umgekehrt die Lösung des Ethylencopolymerisates $[(A_n)_i (B_1)_k]$ zur aktiven Living-Polymerisatlösung ($C_m$) unter Stickstoff, Feuchtigkeitsausschluß und Rühren bei Temperaturen im Bereich von 0 bis 130°C, vorzugsweise 20 bis 100°C, gegeben werden. Die Reaktion ist im allgemeinen nach wenigen Minuten, maximal nach 120 Minuten, abgelaufen. Das erhaltene Blockcopolymerisat kann in Lösung oder nach einem gesonderten Aufarbeitungsschritt, wie Ausfällen, Eindampfen oder Direktentgasen verwendet werden.

Die auf diesem Weg erhaltenen Blockcopolymerisate sind vom allgemeinen Typ $[(A_n)_i (B_1)_k (C_m)_j]$, wobei A, B, C unterschiedliche einpolymerisierte Monomere sind. Bei A handelt es sich um $-CH_2-CH_2-$, bei B um ein oben beschriebenes einpolymerisiertes Monomer mit einer funktionellen Gruppe und bei C um ein oder mehrere anionisch polymerisierte Monomere. Dabei sind n und m 30; l = 1; i, k und j = 1; n, l und m entsprechen dem Polymerisationsgrad , i, k und j der Blockanzahl im Blockcopolymerisat.

Die erfindungsgemäß erhaltenen Blockcopolymerisate sind neuartige Polymerisate mit einer Vielfalt von Eigenschaften und zeigen eine Reihe von Vorteilen gegenüber bisher bekannten Blockcopolymerisaten. Sie können auf herkömmlichen Verarbeitungsmaschinen durch Spritzgießen, Formpressen, Formblasen oder Extrusion verarbeitet werden. Sie können alleine, insbesondere als Schmelzhaftkleber, als Mineralöladditive oder in Kombination mit anderen Thermoplasten zur Verbesserung der Zähigkeit, Fließeigenschaften und des Oberflächenbildes verwendet werden.

Die Erfindung wird anhand der nachfolgenden Beispiele erläutert.

**0082399**

<u>Beispiele 1 bis 28</u>

Als Ethylencopolymerisate finden Produkte Verwendung, die nach dem Hochdruckprozeß in Autoklaven oder rohrförmigen Polymerisationssystemen erhalten werden. Der Comonomeranteil, die Dichte und der Schmelzindex sind in der Tabelle aufgeführt.

Als Polymerisate aus den anionisch polymerisierbaren Monomeren werden Produkte verwendet, die durch anionische Polymerisation in Lösung erhalten werden.

Herstellung des Blockcopolymerisates

Das Ethylencopolymerisat, das 8 Stunden bei 90°C im Vakuum bei 1 Torr getrocknet wurde, wird in wasserfreiem Xylol bei 80 bis 110°C unter Stickstoff gelöst.

Zu der in der Tabelle angegebenen Menge an Ethylencopolymerisat (ca. 10 gew.-%ig in Lösung) wird unter Luft- und Feuchtigkeitsausschluß bei der in der Tabelle angegebenen Temperatur, die in der Tabelle angegebene Menge an aktivem, lebenden Polymerisat eines anionisch polymerisierten Monomeren in Lösung während 1 bis 60 Minuten, vorzugsweise 10 bis 30 Minuten, unter kräftigem Rühren zugegeben. Nach beendeter Zugabe wird noch 10 bis 120 Minuten, vorzugsweise 10 bis 30 Minuten, bei 50 bis 90°C gerührt. Danach wird das Reaktionsprodukt mit Ethanol ausgefällt, abgesaugt, zweimal mit Ethanol gewaschen und bei 60°C im Vakuum bei 1 Torr getrocknet.

Zur Bestimmung der Reaktionsausbeute werden einmal 5 g des eingesetzten Ethylencopolymerisats und zum anderen 5 g des Blockcopolymerisates 5 Stunden bei 23°C in 100 ml des in der Tabelle angegebenen Lösungsmittel geschüttelt.

Man dekantiert und wiederholt den Vorgang noch zweimal. Dann wird nach dem Abdampfen des Lösungsmittels der unlösliche Anteil bestimmt. Die Ausbeute wird hieraus folgendermaßen berechnet:

$$\text{Reaktionsausbeute } [\%] = \frac{A \cdot 100}{B}$$

A: unlöslicher Anteil des Blockcopolymerisates [g]
B:    "         "         "   Ethylencopolymerisates [g].

Die Ermittelung des Schmelzindex erfolgt bei 190°C und 2,16 Kp nach DIN 53 735, die der Dichte nach DIN 53 479.

Tabelle

| Beispiele | Ethylencopolymerisat Comonomeres [Gew.-%] | | Dichte [g/cm³] | Schmelzindex [g/10 Min] | Gew.-Tle. | Polymer aus den anionisch polymerisierbaren Monomeren | | |
|---|---|---|---|---|---|---|---|---|
| | | | | | | Monomer | Polymerisationsgrad | [Gew.-Tle.] |
| 1 | Methacrylat | 1 | 0,922 | 0,7 | 70 | Styrol | 200 | 30 |
| 2 | n-Butylacrylat | 1 | 0,921 | 0,3 | 70 | Styrol | 200 | 30 |
| 3 | " | 4 | 0,926 | 0,3 | 70 | Styrol | 200 | 30 |
| 4 | " | 4 | 0,926 | 0,3 | 50 | Styrol | 200 | 50 |
| 5 | " | 4 | 0,926 | 7 | 70 | Styrol | 200 | 30 |
| 6 | " | 4 | 0,926 | 0,3 | 70 | Butadien | 270 | 30 |
| 7 | " | 4 | 0,926 | 0,3 | 50 | Butadien | 370 | 50 |
| 8 | " | 4 | 0,926 | 7 | 70 | Styrol | 390 | 30 |
| 9 | " | 4 | 0,926 | 7 | 70 | Butadien | 740 | 30 |
| 10 | " | 4 | 0,918 | 0,3 | 80 | Styrol | 960 | 20 |
| 11 | " | 4 | 0,918 | 0,3 | 80 | Butadien | 1850 | 20 |
| 12 | " | 4 | 0,926 | 0,3 | 70 | Isopren | 970 | 30 |
| 13 | " | 4 | 0,926 | 0,3 | 60 | Styrol/Butadien (1:1) + | 200 | 40 |
| 14 | " | 4 | 0,921 | 0,7 | 70 | Butadien | 280 | 30 |
| 15 | " | 4 | 0,921 | 0,7 | 70 | Butadien | 280 | 30 |
| 16 | " | 4 | 0,921 | 0,7 | 70 | Butadien | 280 | 30 |
| 17 | " | 4 | 0,921 | 0,7 | 70 | Butadien | 280 | 30 |
| 18 | " | 18 | 0,925 | 1,8 | 90 | Styrol | 200 | 10 |
| 19 | " | 18 | 0,925 | 1,8 | 80 | Styrol | 200 | 20 |
| 20 | " | 18 | 0,925 | 1,8 | 70 | Styrol | 200 | 30 |

Tab. Forts.

| 21 | n-Butylacrylat | 18 | 0,925 | 1,8 | 60 | Styrol | 200 | 40 |
|---|---|---|---|---|---|---|---|---|
| 22 | " | 18 | 0,925 | 1,8 | 50 | Styrol | 200 | 50 |
| 23 | " | 18 | 0,925 | 1,8 | 40 | Styrol | 200 | 60 |
| 24 | " | 18 | 0,925 | 1,8 | 30 | Styrol | 200 | 70 |
| 25 | Ethylhexyl-acrylat | 32 | 0,932 | 68 | 70 | Styrol | 200 | 30 |
| 26 | Maleinsäuren-hydrid | 1 | 0,922 | 0,7 | 70 | Styrol | 750 | 30 |
| 27 | " | 8 | 0,926 | 2,3 | 70 | Styrol | 200 | 30 |
| 28 | Methylmeth-acrylat | 1 | 0,929 | 0,3 | 70 | Styrol | 200 | 30 |

[+]) Molverhältnis 1 : 1

Tab. Forts.

| Beispiele | Blockcopolymerisat selektives Lösungsmittel für den anionisch polymerisierten Block | Reaktionsausbeute [%] | Reaktionstemperatur [°C] |
|---|---|---|---|
| 1 | Tetrahydrofuran | 93 | 80 |
| 2 | " | 94 | 80 |
| 3 | " | 95 | 80 |
| 4 | " | 93 | 80 |
| 5 | " | 96 | 80 |
| 6 | n-Heptan | 92 | 80 |
| 7 | " | 93 | 80 |
| 8 | Tetrahydrofuran | 95 | 80 |
| 9 | n-Heptan | 93 | 80 |
| 10 | Tetrahydrofuran | 96 | 80 |
| 11 | n-Heptan | 92 | 80 |
| 12 | " | 93 | 80 |
| 13 | Tetrahydrofuran | 94 | 80 |
| 14 | n-Heptan | 98 | 60 |
| 15 | " | 91 | 70 |
| 16 | " | 93 | 80 |
| 17 | " | 96 | 90 |
| 18 | Tetrahydrofuran | 97 | 80 |
| 19 | " | 95 | 80 |
| 20 | " | 96 | 80 |
| 21 | " | 92 | 80 |
| 22 | " | 94 | 80 |

Tab. Forts.

| | | | |
|---|---|---|---|
| 23 | Tetrahydrofuran | 80 | 91 |
| 24 | " | 80 | 87 |
| 25 | " | 80 | 90 |
| 26 | " | 80 | 95 |
| 27 | " | 80 | 96 |
| 28 | " | 80 | 94 |

Patentansprüche

1. Verfahren zur Herstellung von Blockcopolymerisaten auf der Basis von Ethylencopolymerisaten, die als funktionelle Gruppe mindestens eine Acrylsäureester-, Methacrylsäureester-, Keto-, Aldehyd-, Nitril-, Halogen-, Carbonsäureanhydrid-, Imino-, Epoxy- oder Isocyanatgruppe einpolymerisiert enthalten, dadurch gekennzeichnet, daß die Ethylencopolymerisate in Lösung mit lebenden polymeren Anionen, erhalten aus ethylenisch ungesättigten, anionisch polymerisierbaren Monomeren, unter Ausschluß von Luft und Feuchtigkeit umgesetzt werden.

2. Verfahren nach Anspruch 1, dadurch gekennzeichnet, daß die Ethylencopolymerisate Copolymerisate des Ethylens mit einem Acrylsäure- oder Methacrylsäurealkylester, mit Maleinsäureanhydrid, Kohlenmonoxid oder Methylvinylketon sind.

3. Verfahren nach Anspruch 1, dadurch gekennzeichnet, daß als Lösungsmittel ein bei Raumtemperatur flüssiger aromatischer Kohlenwasserstoff oder Tetrahydrofuran verwendet werden.

4. Verfahren nach Anspruch 1, dadurch gekennzeichnet, daß die lebenden polymeren Anionen aus 30 oder mehr ethylenisch ungesättigten, anionisch polymerisierten Monomeren bestehen.

5. Verfahren nach Anspruch 1, dadurch gekennzeichnet, daß als ethylenisch ungesättigte, anionisch polymerisierbare Monomere Styrol, Butadien, Isopren oder ein Gemisch dieser Monomeren eingesetzt wird.

0082399

6. Verfahren nach Anspruch 1, dadurch gekennzeichnet, daß bei Temperaturen im Bereich von 0 bis 130°C umgesetzt wird.

7. Blockcopolymerisate nach Anspruch 1 der allgemeinen Formel: $[(A_n)_i (B_l)_k (C_m)_j]$, wobei A = $-CH_2-CH_2-$, B ein mit Ethylen copolymerisiertes (Meth-)Acrylsäureester-, Keto-, Aldehyd-, Nitril-, Halogen-, Anhydrid-, Imino-, Epoxid- oder Isocyanat-Gruppen enthaltendes Monomer oder Kohlenmonoxid, C ein oder mehrere anionisch polymerisierte Monomere, n und m eine ganze Zahl größer als 30, l, i, k und j eine ganze Zahl gleich oder größer als 1 und k.l $\geq$ j ist.

8. Blockcopolymerisate nach Anspruch 7, dadurch gekennzeichnet, daß B Acryl- oder Methacrylsäurealkylester, Maleinsäureanhydrid, Kohlenmonoxid oder Methylvinylketon und C ein Styrol, Butadien, Isopren oder eine beliebige Mischung dieser Monomeren ist.

9. Blockcopolymerisate nach Anspruch 7, dadurch gekennzeichnet, daß n = 200 bis 8000, m = 100 bis 4000, l = 1 bis 1500, i = 1 bis 5, k = 1 bis 20 und j = 1 bis 20.

10. Verwendung der nach Anspruch 1 hergestellten Blockcopolymerisate als Additive zu thermoplastischen Kunststoffen oder Mineralölen.

11. Verwendung nach Anspruch 1 hergestellten Blockcopolymerisate als Schmelzhaftkleber.